# EUROPÄISCHE PATENTANMELDUNG

(11) **EP 1 296 160 A1**
(43) Veröffentlichungstag der Anmeldung: **26.03.2003**
(21) Anmeldenummer: 01440311.7
(22) Anmeldetag: 21.09.2001
(51) Int. Cl.: G01V 3/10

(54) **Induktiver Näherungsschalter**

(71) Anmelder: Senstronic (Société Anonyme), 67700 Saverne (FR)
(72) Erfinder: Schmidt, Ralf, 67251 Freinsheim (DE)
(74) Vertreter: Nuss, Pierre

(57) **Zusammenfassung**

Die Erfindung betrifft eine nach dem induktiven Wirkprinzip arbeitende Näherungs- oder Anwesenheitsschalteranordnung, welche wenigstens eine in einem Schwingkreis integrierte Induktivität und eine nachgeschaltete elektronische Auswertungsvorrichtung beinhaltet, zur Fühlung und Bewertung der Annäherung und/ oder Anwesenheit eines elektromagnetische Felder beeinflussenden Materials.

Anordnung dadurch gekennzeichnet, daß die im Schwingkreis (2) integrierte Induktivität (3) als Sekundärspule eines einem Transformator ähnlichen Spulensystems (6) ausgebildet ist, daß die entsprechende Primärspule (7) einem durch eine im Primärkreis (7') vorhandene Ansteuerungsvorrichtung (8) erzeugten periodischen Erregungssignal unterworfen ist und, daß die Auswertungsvorrichtung (4) mindestens eine Abtastung des im Sekundärkreis (3') entstehenden Stromverlaufs vornimmt, und ein entsprechendes oder entsprechende Auswertungssignal(e) abgibt oder eine entsprechende ähnliche Aktion auslöst.

## Beschreibung

Die vorliegende Erfindung betrifft das Gebiet der Erfassung und des Fühlens mittels elektronischer Sensoren oder Detektoren, insbesondere metallischer Gegenstände, und betrifft eine nach dem induktiven Wirkprinzip arbeitende Näherungs- oder Anwesenheitsschalteranordnung.

Solche Schalteranordnungen werden hauptsächlich im Zusammenhang mit automatisierten Arbeitsvorrichtungen (wie z. B. Robotern) oder mit Sicherheitsvorrichtungen verwendet, insbesondere in der Automobilindustrie.

Die in den bekannten Schaltanordnungen vorhandenen Induktivitäten werden mit einem schwingenden elektrischen Signal gespeist und entwickeln somit ein Wechselhaftes magnetisches Fühlerfeld, dessen Beschaffenheit von der Beschaffenheit der Induktivität und den Merkmalen des gespeisten Signals abhängt.

Solche induktiven Sensoren arbeiten mit LC-Schwingkreisen, wobei die Spule "L" der aktiven Fläche zugeneigt ist und in ihren Eigenschaften von einem äußeren magnetischen Bedämpfungselement beeinflusst werden kann.

Der LC-Schwingkreis bildet ein oszillierendes System, das in einer bestimmten Frequenz selbsttätig schwingt.

Durch die Beeinflussung der Spule durch ein Bedämpfungselement sind die Schwingbedingungen nicht mehr gegeben, so dass die Schwingung abreißt, bis die Beeinflussung beseitigt ist, oder genügend unterdrückt ist, und der Oszillator wieder anschwingen kann.

In der Tat, wenn ein metallischer Gegenstand in den Bereich des Fühlerfeldes eintritt, wird letzteres geändert durch die elektromagnetische Feld ändernde Wirkung dieses Gegenstandes. Diese Änderung wird dann erfasst und bewertet, um gegebenenfalls Aktionen einzuleiten wenn vorbestimmte Bedingungen eintreten bzw. überschritten werden, wie z. B. Schaltzustandsänderungen angeschloßener Schaltverstärker.

Werden diese Schalteranordnungen in einer industriellen Umgebung eingesetzt, kommt es vor, daß sie meß - bzw. fühlstörenden Einflüßen ausgesetzt werden, wie z. B. metalstaub oder Schweizpartikel die sich auf dem Gehäuse ansammeln können, oder starken elektromagnetischen Störfeldern.

Es ist schon eine Schalteranordnung vom eingangsgennanten Typ bekannt, bei der versucht wird, die meßstörenden Einflüße durch eine zusätzliche Anordnung zu kompensieren.

Jedoch kommt es hierbei zu einer komplexen Struktur, in der die kompensierende Komponente selbst störenden Einflüßen ausgesetzt ist und somit nicht immer optimal ausgleichen kann.

Zudem muß noch erwähnt werden, daß bei allen existierenden vorgenannten Anordnungen eine ständige Energiezufuhr notwendig ist.

Schließlich muß auch erwähnt werden, daß die bekannten induktiven Schalteranordnungen mit LC-Schwingkreisen Bestandteile mit konsequenten Speicherkapazitäten benötigen (und entsprechend voluminös sind) und die Zeitspanne der Ermittlungsphasen zeitkontinuierlich ist.

Es ist daher eine Aufgabe der Erfindung zumindest einige der vorgenannten Nachteile zu beheben.

Deshalb betrifft die Erfindung hauptsächlich eine nach dem induktiven Wirkprinzip arbeitende Näherungs- oder Anwesenheitsschalteranordnung, welche wenigstens eine in einem Schwingkreis integrierte Induktivität und eine nachgeschaltete elektronische Steuer -bzw. Auswertungsvorrichtung beinhaltet, zur Fühlung und Bewertung der Annäherung und/ oder Anwesenheit eines elektromagnetische Felder beeinflussenden Materials oder Gegenstands, dadurch gekennzeichnet, daß die im Schwingkreis integrierte Induktivität als Sekundärspule eines einem Transformator ähnlichen Spulensystems ausgebildet ist, daß die entsprechende Primärspule einem durch eine im Primärkreis vorhandene Ansteuerungsvorrichtung erzeugten Erregungssignal unterworfen ist und, daß die Auswertungs- bzw. Steuervorrichtung mindestens, zu einem oder mehreren vorgerelten und geeigneten Zeitpunkt(en) innerhalb einer Zeitperiode des Erregungssignals, eine Abtastung des im Sekundärkreis entstehenden Stroms oder einer von diesem abhängigen Größe vornimmt, und ein entsprechendes oder entsprechende Auswertungssignal(e) abgibt oder eine entsprechende ähnliche Aktion auslöst.

Die Erfindung wird hierunter an Hand von Ausführungsbeispielen und im Zusammenhang mit weiteren Merkmalen näher erläutert, dies im Zusammenhang mit den liegenden Figuren.

Es zeigt:
- Figur 1 ein vereinfachtes schematisches Schaltbild einer erfindungsgemäßen Näherungs- oder Anwesenheitsschalteranordnung ;
- Figur 2A ein Zeitdiagramm des im Primärkreis erzeugten Ansteuerimpulssignals ;
- Figur 2B ein Zeitdiagramm des im Sekundärkreis resultierenden Stromverlauf ;
- Figur 3A eine Seitenansicht eines Spulensysems das Teil derauf Figur 1 gezeigten Anordnung ist, nach einem spezifischen Ausführungsbeispiel der Erfindung;
- Figur 3B eine Ansicht in Richtung A des Spulensystems der Figur 3A.

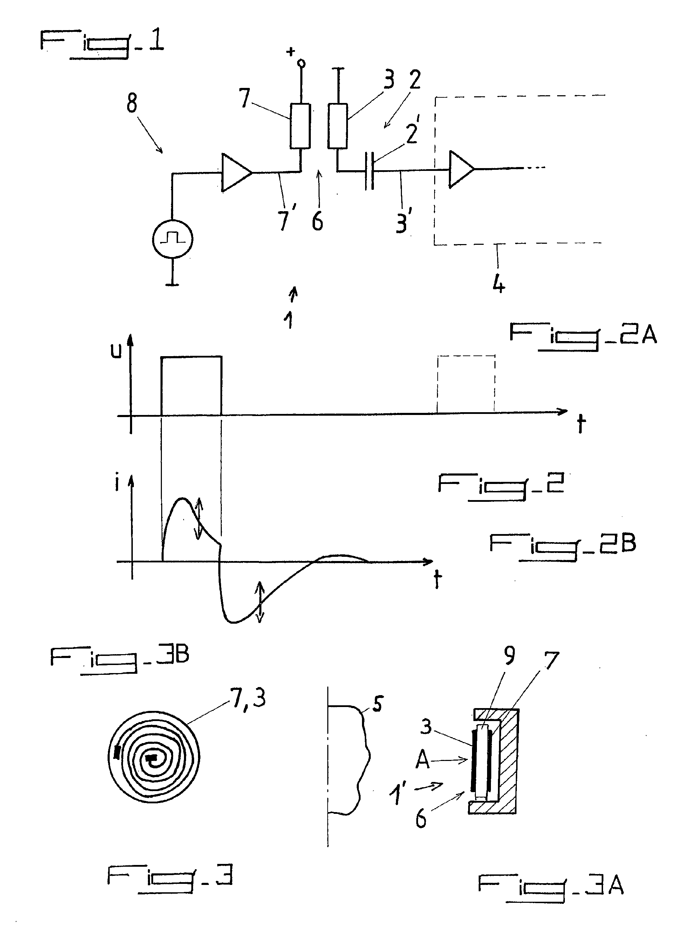

Wie es die Figur 1 zeigt handelt es sich hier um eine nach dem induktiven Wirkprinzip arbeitende Näherungs- oder Anwesenheitsschalteranordnung 1, welche wenigstens eine in einem Schwingkreis 2 integrierte Induktivität 3 und eine nachgeschaltete elektronische Steuer -bzw. Auswertungsvorrichtung 4 beinhaltet, zur Fühlung und Bewertung der Annäherung und/ oder Anwesenheit eines elektromagnetische Felder beeinflussenden Materials oder Gegenstands 5.

Gemäß der Erfindung ist diese Anordnung 1 dadurch gekennzeichnet, daß die im Schwingkreis 2 integrierte Induktivität 3 als Sekundärspule eines einem Transformator ähnlichen Spulensystems 6 ausgebildet ist, daß die entsprechende Primärspule 7 einem durch eine im Primärkreis 7' vorhandene Ansteuerungsvorrichtung 8 erzeugten wiederholendem bzw. periodischem Erregungssignal unterworfen ist und, daß die Auswertungs- bzw. Steuervorrichtung 4 mindestens, zu einem oder mehreren vorgerelten und geeigneten Zeitpunkt(en) innerhalb einer Periodendauer, eine Abtastung des im Sekundärkreis 3' entstehenden Stroms oder einer von diesem abhängigen Größe vornimmt, und ein entsprechendes oder entsprechende Auswertungssignal(e) abgibt oder eine entsprechende ähnliche Aktion auslöst.

Auf Figur 1 besteht die Ansteuervorrichtung 8 aus einem Erregungssignalgenerator und aus einem nachgeschalteten Signalverstärker. Von der Auswertungs- bzw. Steueranordnung 4 ist nur ein eintrittsseitig montierter Signalverstärker ersichtlich.

Der LC-Schwingkreis 2 kann entweder durch seriell oder parallel montierte Spule 3 und Kondensator 2' gebildet werden.

Um die Störempfindlichkeit der Anordnung so gering wie möglich zu halten und somit die Betriebsicherheit der Ermittlungen zu optimisieren, sind die Bestandteile des Sekundärkreises 3' und die Kopplung zwischen Primärspule 7 und Sekundärspule 3 so bestimmt, daß noch während des Anlegens und/ oder des Vorhandenseins des Erregungssignals im Primärkreis 7', ein Stromverlauf im Sekundärkreis 3' zu verzeichnen ist.

Zudem nimmt die Auswertungs- bzw. Steuervorrichtung 4 wiederkehrend, jedoch nicht unbedingt in äquidistanten Zeitabständen folgend, mindestens eine Abtastung des Stromssignals im Sekundärkreis 3' während des Anlegens und/ oder des Vorhandenseins des Erregungssignals im Primärkreis 7' vor, wobei das Erregungssignal vorzugsweise aus periodischen oder nicht-periodischen aufeinanderfolgenden Strom- oder Spannungsimpulsen besteht (Figur 3A).

Der Stromsignalverlauf kann auch ohne weiteres nach dem Erregerimpuls betrachtet werden, ist dort aber wesentlich empfindlicher gegenüber äußeren Störeinflüssen.

Deshalb wird die Abtastung noch im Zeitbereich des Erregerimpulses vorgezogen, da die Schwingung zu dieser Zeit erzwungen wird, durch die primärseitige Erregung.

Gleichgültigerweise kann entweder die Primärspule 7 oder die Sekundärspule 3 allein oder vorrangig dem Einfluß eines etwaigen anwesenden oder vorhandenen elektromagnetisch beeinflussenden Materials oder Gegenstandes 5 ausgesetzt sein und somit der aktiven Fläche 1' der Anordnung 1 zugewandt und/ oder in nächster Nähe zu dieser Fläche 1' angeordnet sein.

Gegebenenfalls können die beiden Spulen 7 und 3 durch eine magnetisch undurchlässige Wand getrennt sein.

Gemäß einer bevorzugten Ausführungform der Erfindung, und wie dies aus der Figur 2 (Figuren 2A und 2B) hervorgeht, ist der aus dem im Sekundärkreis 3' abgetasteten Stromsignal gewonnene und ausgewerte Parameter, der Stromsignalverlauf (insb. die Signalamplitude), welcher sich unter dem Einfluß eines elektromagnetisch beeinflussenden Materials 5, und dessen Entfernung zu der aktiven Fläche 1', ändert.

Die Auswertungs- bzw. Steuervorrichtung 4 enthält Mittel die den abgetasteten Stromsignalamplitudenwert mit einem einer Entfernung entsprechenden Schwellenwert vergleichen und fähig sind einen nachgeschalteten Schaltverstärker anzusteuern oder umzuschalten.

Abwechselnd können die Auswertungs- bzw. Steuervorrichtung 4 Mittel enthalen zur Ausgabe eines von der abgetasteten Signalamplitude abhängigen und einer Entfernung entsprechenden analogen Spannungsoder Stromwertes.

Um eine extrem kompakte Struktur für die Anordnung 1 zu erhalten, kann vorgesehen werden, daß die Primärspule 7 und/ oder die Sekundärspule 3 als Leiterplattenbahnen ausgebildet ist (sind), wobei nur wenig Windungen für jede Spule nötig sein können.

Wie in der Figur 3 (Figuren 3A und 3B) gezeigt, kann vorteilhafterweise das als Tranformator wirkende Spulensystem 6 aus einer, einseitig, beideseitig oder mehrlagig bedruckten, Leiterplatte 9 bestehen, wobei der Plattenkörper eine magnetische Trennwand bilden kann.

Die vorliegende Erfindung betrifft auch ein Verfahren zur Ermittlung der Anwesenheit und/ oder Annäherung eines elektromagnetische Felder beeinflussenden Materials, zum Beispiel unter Verwendung einer Schalteranordnung 1 wie sie vorher beschrieben wurde.

Dieses Verfahren beinhaltet hauptsächlich folgende Schritte :
- Erzeugung eines elektrischen Stroms in der Primärspule 7 eines einem Transformator ähnlichem Mehrspulensystems 6 mittels eines Stromimpulses, so das wenigstens während der Impulsdauer ein Stromverlauf in der Sekundärspule 3 des Spulensystems 6 zu verzeichnen ist, welche Sekundärspule 3 Teil eines seriellen oder parallelen LC-Schwingkreises 2 ist;
- Abtastung, durch eine elektronische Auswertungs- bzw. Steuervorrichtung 4 des im Sekundärkreis 3' induzierten Stromssignals in einem oder mehreren geeigneten Zeitbereich(en), vor der Zufuhr des nächsten Stromimpulses im Primärkreis 7, wobei dieses Stromssignal durch das Vorhandensein und in Abhängigkeit der Entfernung eines etwaigen elektromagnetisch beeinflußenden Materials oder Gegenstandes 5, in seinem Verlauf (insb. in seiner Amplitude) verändert wird ;
- Vergleich der abgetasteten Werte mit einem Schwellwert und etwaige Ansteuerung eines nachgeschalteten Schaltverstärkers, oder, Verarbeitung des abgetasteten Wertes in der elektronischen Steuer- bzw. Auswertungsvorrichtung 4 und Ausgabe eines der Entfernung entsprechenden analogen Spannungs- oder Stromwertes ;
- Wiederholung der vorhergehenden Schritte im Zusammenhang mit wiederholend zugeführten Stromimpulsen im Primärkreis 7'.

Vorzugsweise wird die Abtastung während der Zufuhr und/oder dem Vorhandensein eines (insb quadratischen) Erregungsimpulses im Primärkreis 7' durchgeführt und eine der Primär- und Sekundärspulen 7, 3 ist in bevorzugter Weise dem Einfluß eines etwaigen äußeren elektromagnetisch beeinflussenden Materials 5 ausgesetzt.

Im Zusammenhang mit dem erfindungemäßen Verfahrensablauf, bewirkt das Einschalten des Primärstromes durch einen Stromimpuls, in der Sekundärwicklung eine Anregung eines Resonanzkreises, den diese in Wirkung mit einem Kondensator bildet.

So ist während der Impulsdauer ein Stromverlauf im Sekundärkreis zu verzeichnen, der sich wiederum durch das Vorhandensein eines sich von außen nähernden, das elektromagnetische Feld beeinflussenden, Materials (z. B. Bedämpfungselement BE) ändert.

Somit ensteht durch Abtastung in einem geeigneten Zeitbereich innerhalb der Periodendauer zwischen zwei Sendeimpulsen, eine der Entfernung des BEs entsprechende Signalamplitude.

Zusammenfassend entspricht das Wirkprinzip der Erfindung dem eines Transformatorsystems, bei dem durch die primärseitige Impulserregung (Fremderregung/ nicht Eigenfrequenz) das Anschwingen eines sekundärseitigen Resonanzkreises (seriell oder parallel) hervorgeruft und beurteilt wird.

Dieses Anschwingen erreicht, bis zu einer vorgegebenen Abtastzeit, einen bestimmten Amplitudenwert, die durch ein äußeres Bedämpfungsmaterial oder -gegenstand positiv oder negativ beeinflusst wird (siehe Figur 2B).

Das System kommt mit sehr geringen Induktivitäten 7 und 3 aus, die es z. B. geeignet macht für Applikationen, die eine geringe Speicherwirkung in Induktivitäten und Kapazitäten verlangen.

Selbstverständlich ist die Erfindung nicht auf die beschriebenen und dargestellten Ausführungsformen begrenzt. Änderungen, z. B. in den Ausführungformen der verschiedenen Bestandteile oder Ersetzungen durch technische Äquivalente sind, soweit sie im Rahmen des beanspruchten Schutzbegehrens bleiben, jederzeit möglich.

## Patentansprüche

1. Eine nach dem induktiven Wirkprinzip arbeitende Näherungs- oder Anwesenheitsschalteranordnung, welche wenigstens eine in einem Schwingkreis integrierte Induktivität und eine nachgeschaltete elektronische Steuer -bzw. Auswertungsvorrichtung beinhaltet, zur Fühlung und Bewertung der Annäherung und/ oder Anwesenheit eines elektromagnetische Felder beeinflussenden Materials oder Gegenstands, **dadurch gekennzeichnet, daß** die im Schwingkreis (2) integrierte Induktivität (3) als Sekundärspule eines einem Transformator ähnlichen Spulensystems (6) ausgebildet ist, daß die entsprechende Primärspule (7) einem durch eine im Primärkreis (7') vorhandene Ansteuerungsvorrichtung (8) erzeugten Erregungssignal unterworfen ist und, daß die Auswertungs- bzw. Steuervorrichtung (4) mindestens, zu einem oder mehreren vorgerelten und geeigneten Zeitpunkt(en) innerhalb einer Zeitperiode des Erregungssignals, eine Abtastung des im Sekundärkreis (3') entstehenden Stroms oder einer von diesem abhängigen Größe vornimmt, und ein entsprechendes oder entsprechende Auswertungssignal(e) abgibt oder eine entsprechende ähnliche Aktion auslöst.

2. Näherungs- oder Anwesenheitsschalteranordnung gemäß Anspruch 1, **dadurch gekennzeichnet, daß** die Bestandteile des Sekundärkreises (3') und die Kopplung zwischen Primärspule (7) und Sekundärspule (3) so bestimmt sind, daß noch während des Anlegens und/oder des Vorhandenseins des Erregungssignals im Primärkreis (7'), ein Stromverlauf im Sekundärkreis (3') zu verzeichnen ist und, daß die Auswertungs- bzw. Steuervorrichtung (4) wiederkehrend mindestens eine Abtastung des Stromssignals im Sekundärkreis (3') während des Anlegens und/ oder des Vorhandenseins des Erregungssignals im Primärkreis (7') vornimmt, wobei das Erregungssignal vorzugsweise aus periodischen oder nicht-periodischen aufeinanderfolgenden Strom- oder Spannungsimpulsen besteht.

3. Näherungs- oder Anwesenheitsschalteranordnung gemäß Anspruch 1 oder 2, **dadurch gekennzeichnet, daß** die Sekundärspule (3) allein oder vorrangig dem Einfluß einem etwaigen anwesenden oder vorhandenen elektromagnetisch beeinflussenden Material oder Gegenstand (5) ausgesetzt ist und der aktiven Fläche (1') der Anordnung (1) zugewandt und/ oder in nächster Nähe zu dieser Fläche (1') angeordnet ist.

4. Näherungs- oder Anwesenheitsschalteranordnung gemäß Anspruch 1 oder 2, **dadurch gekennzeichnet, daß** die Primärspule (7) allein oder vorrangig dem Einfluß eines etwaigen anwesenden oder vorhandenen elektromagnetisch beeinflussenden Materials oder Gegenstands (5) ausgesetzt ist und der aktiven Fläche (1') der Anordnung (1) zugewandt und/ oder in nächster Nähe zu dieser Fläche (1') angeordnet ist.

5. Näherungs- oder Anwesenheitsschalteranordnung gemäß einem der Ansprüche 1 bis 4, **dadurch gekennzeichnet, daß** der aus dem im Sekundärkreis (3') abgetasteten Stromsignal gewonnene und ausgewerte Parameter, der Stromsignalverlauf ist, welche sich unter dem Einfluß eines elektromagnetisch beeinflussenden Materials (5), und dessen Entfernung zu der aktiven Fläche (1'), ändert und, daß die Auswertungs- bzw. Steuervorrichtung (4) Mittel enthält die den abgetasteten Stromsignalamplitudenwert mit einem einer Entfernung entsprechenden Schwellenwert vergleichen und fähig sind einen nachgeschalteten Schaltverstärker anzusteuern oder umzuschalten.

6. Näherungs- oder Anwesenheitsschalteranordnung gemäß einem der Ansprüche 1 bis 4, **dadurch gekennzeichnet, daß** der aus dem im Sekundärkreis (3') abgetasteten Stromsignal gewonnene und ausgewerte Parameter, der Stromsignalverlauf ist, welcher sich unter dem Einfluß eines elektromagnetisch beeinflussenden Materials (5), und dessen Entfernung zu der aktiven Fläche (1'), ändert und, daß die Auswertungs- bzw. Steuervorrichtung (4) Mittel enthält zur Ausgabe eines von der abgetasteten Signalamplitude abhängigen und einer Entfernung entsprechenden analogen Spannungs- oder Stromwertes.

7. Näherungs- oder Anwesenheitsschalteranordnung gemäß einem der Ansprüche 1 bis 6, **dadurch gekennzeichnet, daß** die Primärspule (7) und/ oder die Sekundärspule (3) als Leiterplattenbahnen ausgebildet ist (sind).

8. Näherungs- oder Anwesenheitsschalteranordnung gemäß Anspruch 7, **dadurch gekennzeichnet, daß** das als Tranformator wirkende Spulensystem (6) aus einer, einseitig, beideseitig oder mehrlagig bedruckten, Leiterplatte (9) besteht.

9. Verfahren zur Ermittlung der Anwesenheit und/ oder Annäherung eines elektromagnetische Felder beeinflussenden Materials, zum Beispiel unter Verwendung einer Schalteranordnung (1) gemäß einem der Ansprüche 1 bis 8, **dadurch gekennzeichnet, daß** dieses Verfahren folgende Schritte beinhaltet :
- Erzeugung eines elektrischen Stroms in der Primärspule (7) eines einem Transformator ähnlichem Mehrspulensystems (6) mittels eines Stromimpulses, so das wenigstens während der Impulsdauer ein Stromverlauf in der Sekundärspule (3) des Spulensystems (6) zu verzeichnen ist, welche Sekundärspule (3) Teil eines seriellen oder parallelen LC-Schwingkreises (2) ist;
- Abtastung, durch eine elektronische Auswertungs- bzw. Steuervorrichtung (4) des im Sekundärkreis (3') induzierten Stromssignals in einem oder mehreren geeigneten Zeitbereich(en), vor der Zufuhr des nächsten Stromimpulses im Primärkreis (7), wobei dieses Stromssignal durch das Vorhandensein und in Abhängigkeit der Entfernung eines etwaigen elektromagnetisch beeinflussenden Materials oder Gegenstandes (5), in seiner Amplitude verändert wird ;
- Vergleich der abgetasteten Werte mit einem Schwellwert und etwaige Ansteuerung eines nachgeschalteten Schaltverstärkers, oder, Verarbeitung des abgetasteten Wertes in der elektronischen Steuer- bzw. Auswertungsvorrichtung (4) und Ausgabe eines der Entfernung entsprechenden analogen Spannungs- oder Stromwertes ;
- Wiederholung der vorhergehenden Schritte im Zusammenhang mit wiederholend zugeführten Stromimpulsen im Primärkreis (7').

10. Verfahren gemäß Anspruch 9, **dadurch gekennzeichnet, daß** die Abtastung während der Zufuhr und/ oder dem Vorhandensein des Erregungsimpulses im Primärkreis (7') durchgeführt wird und, daß eine der Primär- und Sekundärspulen (7, 3) in bevorzugter Weise dem Einfluß eines etwaigen äußeren elektromagnetisch beeinflussenden Materials (5) ausgesetzt ist.
